(19) Europäisches Patentamt
European Patent Office
Office européen des brevets

(11) Publication number: **0 313 690 A1**

# (12) EUROPEAN PATENT APPLICATION

(21) Application number: **87309464.3**

(22) Date of filing: **27.10.87**

(51) Int. Cl.$^4$: **B62K 9/00 , B62K 5/00 , B62M 1/04**

(43) Date of publication of application:
**03.05.89 Bulletin 89/18**

(84) Designated Contracting States:
**AT BE CH DE ES FR GB GR IT LI LU NL SE**

(71) Applicant: **Lian, Hong Rong**
**2F, No. 479, An-Leh Road**
**Yung Heh City Taipei Hsien(TW)**

(72) Inventor: **Lian, Hong Rong**
**2F, No. 479, An-Leh Road**
**Yung Heh City Taipei Hsien(TW)**

(74) Representative: **Harding, Richard Patrick et al**
**Arthur R. Davies & Co. 27 Imperial Square**
**Cheltenham GL50 1RQ(GB)**

## (54) A children's mini-car.

(57) The car includes a specific gear set disposed on a rear axle 5. The specific gear set, which is driven by the ropes disposed on both sides of the rear axle, is arranged to cooperate with an accelerator pedal 2, located on both sides of a front transverse rod 1 to alternatively drive the rear wheels to move forward. In addition, a gear shift lever 64 is used to control the gear set so as to reverse the car with the aid of a rear view mirror. Furthermore a detachable car seat can be removed from the car, and a steering wheel can be replaced by a movable pedal such that the car may act as a safe children's sliding car by utilizing an auxiliary brake system located below the steering wheel.

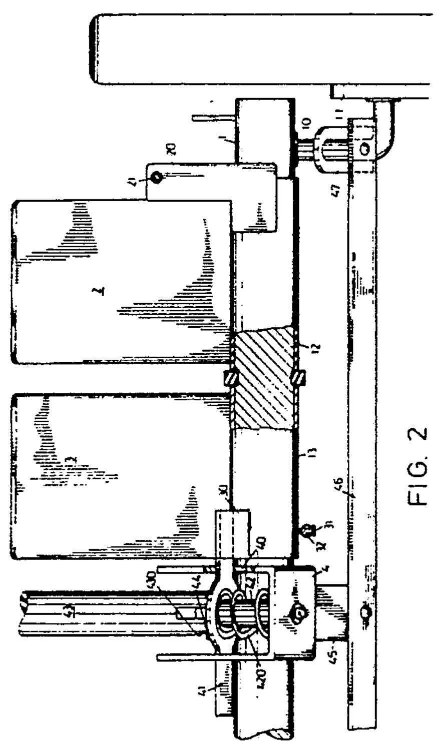

FIG. 2

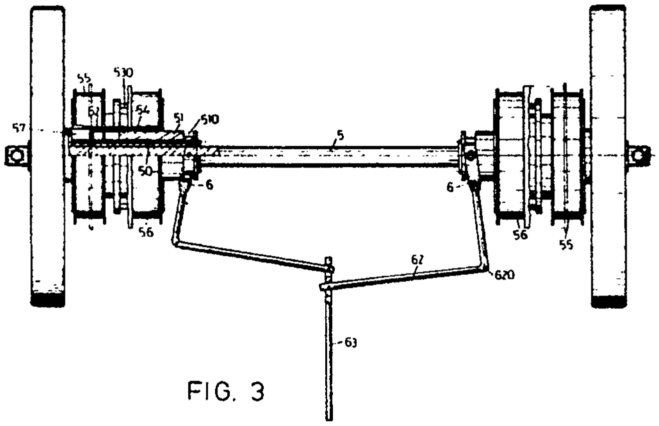

FIG. 3

EP 0 313 690 A1

# A Children's Mini-Car

The present invention relates to a mini-car and more particularly to a multi-purpose children's mini-car which may act as both a mini-car and a sliding car.

In conventional children's mini-car, a pedal is arranged to directly cross the main body of the car in order to directly drive the car to move forward. However, when reversing the car, the driver has to change both the pedaling direction and the hand's orientation. Therefore, it is difficult to control the backward direction of the aforesaid mini-car. In addition, conventional mini-car usually lacks an auxiliary brake mechanism to control its speed so that the driver has to brake the car by contacting his feet with ground. This is quite inconvenient and may adversely affect the mood of the driver.

It is, therefore, an object of the present invention to obviate and mitigate the above-mentional drawbacks.

It is the primary object of the present invention to provide a children's mini-car which comprises a pair of square groove shafts which are respectively secured to both ends of a rear axle of said mini-car such that said square groove shafts associated with a specific gear set may cooperate with a gear shifting lever to reverse said mini-car. In addition, said mini-car further comprises a rear view mirrow to facilitate the reverse of same.

It is another object of the present invention to provide a children's mini-car which comprises a pair of pull ropes disposed on each of the protective frames which are respectively secured to both lateral edges of the rear axle such that said pull ropes can be driven by a pair of accelerater pedals to force the mini-car forward. The wheels of the mini-car are separately driven by said accelevator pedals associated with said pull ropes. Therefore, this arrangement may facilitate the control of the reverse and the left/right turn of the instant mini-car.

It is a further object of the present invention to provide a children's mini-car which may act as a sliding car by removing a detachable rear seat as well as a detachable backrest from same or act as a horse-car by changing the outlook of the appearance.

It is still a further object of the present invention to provide a children's mini-car which comprises an auxiliary brake system secured to the middle of a front transverse rod wherein said auxiliary brake system may provide a brake effect by pressing a steering wheel downword. Furthermore, a brake pedal adjacent to the accelerator pedal is used to brake the instant mini-car.

## BRIEF DESCRIPTION OF THE DRAWINGS

FIG.1 is a perspective view of a preferred embodiment of the present invention;

FIG.2 is a schematic view showing the arrangement of a front transverse rod of the present invention;

FIG.3 is a front view of a rear axle of the present invention;

FIG.4 is a top plan view of the rear axle shown in FIG. 3;

FIG.5 is a partial perspective view illustrating a reverse mechanism of th present invention;

FIG.6 is a side view of a bottom plate of the car in accordance with the present invention;

FIG.7 is a schematic view showing the motion of an an accelerator pedal of the present invention;

FIG.8 is a schematic view showing the motion of an auxiliary brake system of the present invention;

FIG.9 is a schematic view showing the motion of a brake system of the present invention;

FIG.10 is a perspective view of the present invention wherein the instant case acts as a further embodiment of a car;

FIG.11 is a perspective view of a further preferred embodiment of the present invention; and

FIG.12 is a perspective view of still a further preferred embodiment of the present invention.

## DETAILED DESCRIPTION OF THE PREFERRED EMBODIMENT

FIG.1 shows a preferred embodiment of the present invention. However, it is appreciated that the appearance of the instant invention can be modified as desired.

FIG.2 is a schematic view showing the arrangement of a front transverse rod as well as the relevant components. The front transverse rod (1) is supported on a front hub (11) by a pair of rotatable L-shaped rods (10) each of which is disposed on each side of said front transverse rod (1). The middle of the front transverse rod(1) is provided with a U-shaped frame (4) to which an auxiliary brake system is secured. The front transverse rod (1) is furnished at both side with a pair of rod members (12) and (13) wherein the rod member (12) is formed at its rear edge with an accelerator pedal (2) and another rod member (13) is furnished at its rear edge with a brake pedal(3). A pull rope fixing plate (20) is disposed on the front edge of the rod member (12) to cooperate with the reciprocating motion of the accelerator pedal in order to intermittently draw the pull rope. The front edge of the rod member (13) has a flat plate (30) and the lower position thereof is provided with a rib (31) to which a brake stick (32) can be mounted.

The U-shaped frame (4) is provided at both sides with pair of openings (40) to which an auxiliary brake piece (41) is secured. Both protruding ends of the piece (41) is arranged to directly lie on the flat plate (30). The brake piece (41) has a central hole through which a rotatable supporting column (42) passes with the top edge of said supporting column directly being insenyed into the steering wheel sleeve (43). The bottom edge of the sleeve (43) is arranged to press on the brake piece (41). The side wall of the sleeve (43) is formed with a key slot (430) which may lock the supporting column (42) in position by mean of a position key (44) and may limit the travel of the sleeve (43). A spring (420) is disposed between the supporting column (42) and the bottom of the U-shaped frame (4). A link member (45) clamped between the supporting column (42) and the U-shaped frame (4) is connected with a guide plate (46). Both sides of the guide plate (46) is secured to the L-shaped rod (10) by means of link member (47) so as to control the left/right turn of the front wheels. The top edge of the sleeve (43) connects with a steering wheel (48) which may rotate the supporting column (42) and in turn may control the left/right displacement of the guide plate (46) so as to adjust the turning orientation of the front wheels.

Referring to FIGS 3 and 4, a rear axle mechanism comprises a rear axle (5) to support a pair of rear wheels. A pair of squar groove shafts (50) each adjacent to the inner side of each rear wheel is properly disposed on the rear axle (5) in order to guide the transverse displacement of the double-sided gear (51). The rear axle (5) is further provided with three gear sets which are supported by a pair of outer and inner protective frames (55) and (56) wherein a spring (57) adjacent to the rear wheel is disposed on the outer protective frame (55) and a forward inner gear (52) is located at the lateral side of the spring (57), and wherein the inner protective frame (56) has at its outer side a spring (58) (as shown in FIG.4) and a backward inner gear (54) opposite to said forward inner gear (52) is disposed on the left side of the spring (58). An idle gear (53) is located between said two protective frames (55) and (56) such that the supporting arms extending outward thereform can support said two inner gears and can further connect with said two protective frames. The design of the supporting arms may synchronously rotate the aforesaid three gear sets. In addition, the tooth width of the double-sided gear is designed to correspond to the sum of the width of any two of said gear sets. That is, the tooth of the double-sided gear is arranged to engage with both the idle gear and one of the inner gears in order to support said idle gear.

Referring again to FIGS. 4 and 5, and one of each of said two springs (57) and (58) is connected with each of a pair of fixing pins (74) and (75) and the other and thereof is joined with each of said two frames such that the springs can be compressed as said inner and outer protective frames are driven to rotate. The outer protective frames (55) is wound around its periphery with a cable (59) and the inner protective frame (56) has a ring-shaped (560) which is wound with another cable (59). The winding direction of said two cables with respect to the corresponding protective frames are opposite to each other because the rotating direction of said two protective frames are different. Said two cables intersect at a proper location below the bottom plate of the car and a cable segment extends upward from said intersection (not shown) to connect with a pair of handles (90) disposed on each side of the car. The cables (59) are further connected with the pull rope fixing plate (20) such that when the fixing plate (20) is actuated, the inner and outer protective frames (55) and (56) can be rotated via the aid of the pull rope (21) and the cable (59) so as to twist the springs (57) and (58). At this instant, the inner gears respectively disposed in the protective frames can in turn be rotated in such a manner that the rear wheels can be driven to move forward or backward depending on the location of the double-sided gear. That is to say, the inner gear, which does not engage with the double-sided gear, will be in null rotation with the idle gear. The springs (57) and (58) are used to draw the inner and outer protective frames, the cable and the pull rope back to their original positions for next ready use. It is noted that the rotating directions of said two inner gears are opposite to each other. In view of this fact, we may realize that the power transmission of the instant case is independent such that this arrangement can facilitate the left/right turn of the car within a small space. Furthermore, since the motion of said springs is intermittent, the power provided by said springs is limited so that the instant car is provided with a brake system which can further ensure the security of the instant car.

Referring to FIGS.4 and 5, the double-sided gear (51) is arranged to cooperate with the inner gear (52) and the idle gear (53) so that when the accelerator pedal (2) is actuated, the rear wheels will be forced forward. The double-sided gear (51) is provided with recess (510) which can be champed by a Y-shaped frame (6). A pair of arcuate slidable blocks (60) are disposed between the Y-shaped frame (6) and the recess (510) (as shown in FIG.5). Each block (60) is fixed to its position by means of a screw (61) to allow the double-sided gear (51) to freely rotate. connected with a straight rod (63). the corner of the L-shaped link(62) has a pin (620) which is secured to the bottom plate of the car. The straight rod (63) extends along the car body to a predetermined location and then extents upward to connect with the handle (64). A E-shaped guide slot is arranged to correspond to the handle (64) in order to guide slot is used to hold the handle (64) in its current position (the guide slot can be formed in any position where the children can easily hold). When the handle is engaged with the front edge of the E-shaped guide slot, the straight rod (63) will be forced forward by the lever effect provided by the fixing pin (620) such that the Y-shaped frame (6) may force the double-sided gear to move along the square groove shaft (50) to engage with the backward inner gear (54). Meanwhile, the double-sided gear still maintains its engagement with the idle gear (53). At this instant, said two protective frames (55) and (56) can be simultanesusly actuated when the accelerator pedal (2) is forced forward. However, the power is provided by the inner protective frame (56) and the forward inner gear is in a null rotation state.

Referring to FIGS.5 and 6, a U-shaped frame (7) is mounted on the rear axle (5) and located between the inner edges of said square groove shaft (50). A rectangular frame (70) is supported by a supporting frame (71) and said rectangular frame (70) is used to support the bottom plate of the car. The rectangular frame (70) is provided at both sides with a pair of L-shaped cover plates (73), each of which connects with the fixing pin (74) to secure the spring (57) disposed in the outer protective frame (55). The fixing pin (75) is used to secure the spring (58) together with the front transverse rod (58) to a proper postition outside the pull rope fixing plate (20). A side frame (76) is provided to support the bottom plate (72) of the car.

Referring to FIG.7, when the accelerator pedal (2) is forced forward, the rod member (12) is rotated to force the pull rope fixing plate (20) forward such that the pull rope (21) associated with the cable (59) in turn are drawn to rotate. The relevant protective frame as well as the forward inner gear. In this way, the spring is twisted so as to move the car forward. When the accelerator pedal (2) is releasd, the compressed spring can force said pedal back to its original position.

Referring to FIGS. 8 and 9, when a brake pedal (13) is forced forward, the rod member (13) is rotated to force the the flat plate (30) downward and to force the rib (31) backward. Meanwhile, the rib (31) may drive the brake stick (32) backward. The brake stick (32) is connected at its end with a two-way connector (8) which has at both sides a pair of brake transverse rods (80). The brake transverse rod (80) is divided into two parts at a predetermined location wherein one horizontal part (800) thereof is aligned with and spaced from the rear wheel and the other part thereof is secured to a bolt (82) mounted to a lateral base plate (81) of the car. A spring (83) is disposed on the bolt (82) in such a manner that when the brake stick (32) together with the two-way connector (8) are forced backward, the horizontal part (800) of the brake transverse rod (80) will be slightly forced inward to both compress the spring and brake the wheels. When the brake pedal (3) is released the rod member (13) and associated link members can return to their original positions with the aid of the spring (83).

FIG.8 shows an auxiliary brake system. It will be understood that the instant mini-car may act as a sliding car by removing a rear seat (9) from said mini-car. (as shown in FIG.10). In this case, the auxiliary brake system can be directly controlled by the steering wheel (48) as follows. Firstly press the steering wheel sleeve (43) downward to drive the brake piece (41) so as to force the flat plate (30) downward. Then, the rod member (13) can be rotated to force the rib (31) backward such that the brake stick (32) may provide a similar brake effect as mentioned above. When the steering wheel (48) is released, the spring (83) can force the rod member (31) to return to its original position and the spring (420) below the brake piece (41) can force the brake piece (41) as well as the sleeve (43) to return their original positions.

Referring to FIG.11, the present invention is shaped as a horse wherein the rear feet thereof are provided with a pair of larger wheels through which a rear axle passes. The construction of said rear axle is similar to that of FIG.1 and therefore it will not be repeated herein. A pair of footboards adjacent to both sides of the horse body are connected with the brake stick (32) disposed in the interior of the horse body. Pedaling any one of said two footboards may brake the overall motion of the horse. A pair of reins are disposed on the horse neck. A transverse rod is mounted to the ends of said two reins to facilitate the left/right turn of the horse. The front feet of the horse are provided with a level connecting a wheel to facilitate the motion of the horse.

FIG.12 illustrates a swan-shaped children's mini-car wherein a pair of brake pedals are disposed on the front of a seat. The left/right trun of the instant mini-car can be controlled by pedaling the brake pedals. A pair of cables are designed to be drawn by the children to increase the motion speed. It may as a sliding car too by removing the rear seat (as shown in dotted line).

## Claims

1. A children's mini-car comprising:
a pair of inner and outer rod members being symmetrically secured to a front transverse rod, an auxiliary brake system being secured to the front edge of the middle of said front transverse rod, a pair of square groove shafts each being secured to a rear axle to link the corresponding rear wheel, a pair of double-sided gears each being disposed on each said square groove shaft in such a manner that said double-sided gear can transversely move along said square groove shaft, said double-sided gear being formed at one side with a recess, a brake and gear shifting link mechanism being disposed between said front transverse rod and said rear axle, said front transverse rod and said rear axle, said front transverse rod being supported on a pair of front hubs by a pair of L-shaped supporting rods which are respectively secured to both ends of said front transverse rod, a frame being disposed on said front transverse rod to support a bottom plate of the car, said outer rod member being provided with an accelerator pedal and a pull rope fixing plate, said inner rod member being furnished with a brake pedal and a flat plate which can be driven by said auxiliary brake system, the bottom side of said inner rod member being formed with a rib, three gear sets being disposed between a pair of inner and outer protective frames, said outer protective frame being provided at one side with a spring and at the other side with a forward inner gear, said inner protective frame being provided at one side with a spring and at the other side with a backward inner gear, a idle gear being located between said forward inner gear and said backward inner gear, said idle gear being formed at both sides with a pair of supporting arms by which said idle gear can be supported on said two inner gears and said two protective frames, each said spring being secured at one end to each corresponding protective frame and the other end thereof being secured to said rear axle, each said spring being locked to its position by a fixing pin, a pair of cables being respectively disposed on said inner and outer protective frames, the winding directions of said two cables being opposite to each other, said two calbes intersecting at a predetermined location below said bottom plate of the car and further connecting with a pull rope which is secured to a pull rope fixing plate, such that when said accelerator pedal is actuated, said inner and outer protective pedal is actuated, said inner and outer protective frames can be rotated via the aid of said outer rod member associated with said pull rope fixing plate, said pull rope and said cables so as to twist said springs and then the power is transferred to said square groove shafts to move said rear wheels forward or backward dependig on the engagement location of said double-sided gear.

2. A children's mini-car as claimed in claim 1, wherein a Y-shaped frame is secured to said recess of said double-sided gear, said Y-shaped frame being provided with a pair of arcuate slidable blocks fixed by the corresponding fasteners, said Y-shaped frame having a L-shaped link which is connected with a straight rod, said L-shaped link has at it corner a fixing pin which is secured to said bottom plate of the car, said straight rod extending upward to connect with a handle, whereby when said handle is actuated, said L-shaped link can drive said Y-shaped frame via the aid of a lever effect provided by said straight square groove shaft such that said double-sided gear can either engage with or disengage from one of said forward and backward inner gears.

3. A children's mini-car as claimed in claim 2, wherein the tooth width of said double-sided gear is arranged to correspond to the sum of the width of any two of said gear sets so as to support said idle gear.

4.A children's mini-car as claimed in claim 1, wherein said brake link mechanism comprises a brake stick, a brake transverse rod, fasteners, a two-way connector and springs, said brake stick being connected at one end with said rib of said inner rod member and at the other end with said two-way connector which is furnished at both sides with said brake transverse rods, each brake transverse rod being divided into tow parts in which one horizontal part thereof is aligned with and spaced from the rear wheel and the other part thereof is secured to a bolt mounted to a lateral base plate of the car, a spring being disposed on said bolt in such a manner that when said brake pedal is actuated, said horizontal part of said brake transverse rod can be forced to both brake the wheels and compress the spring via the aid of said rib, said brake stick and said two-way connector.

5. A children's mini-car as claimed in claim 1, wherein said auxiliary brake system comprises a steering wheel sleeve, a brake piece, a spring and a U-shaped frame, said U-shaped frame being secured to the front edge of the middle of said front transverse rod, said U-shaped frame being provided at both sides with a pair of openings to which said brake piece can be secured, both protruding ends of said piece being arranged to directly lie on said flat plate, said brake piece having a central hole through which a supporting column passes, said supporting column being inserted into said steering wheel sleeve, the bottom edge of said sleeve being arranged to press on said brake piece, a spring being disposed below said brake piece whereby when said steering wheel sleeve is forced downward to drive said brake piece associated with said flat plate to move downward, said inner rod member is rotated to force said rib backward such that said brake stick may provide a brake effect, and said brake piece further may compress said spring such that when said steering wheel sleeve is released, said spring may force said brake piece as well as said steering wheel sleeve back to their original positions.

6. A children's mini-car as claimed in claim 1, wherein a rear seat together with a backrest are detachably secured to said bottom plate of the car such that said mini-car can serve as a drawing car by removing said rear seat as well as said backward from said car.

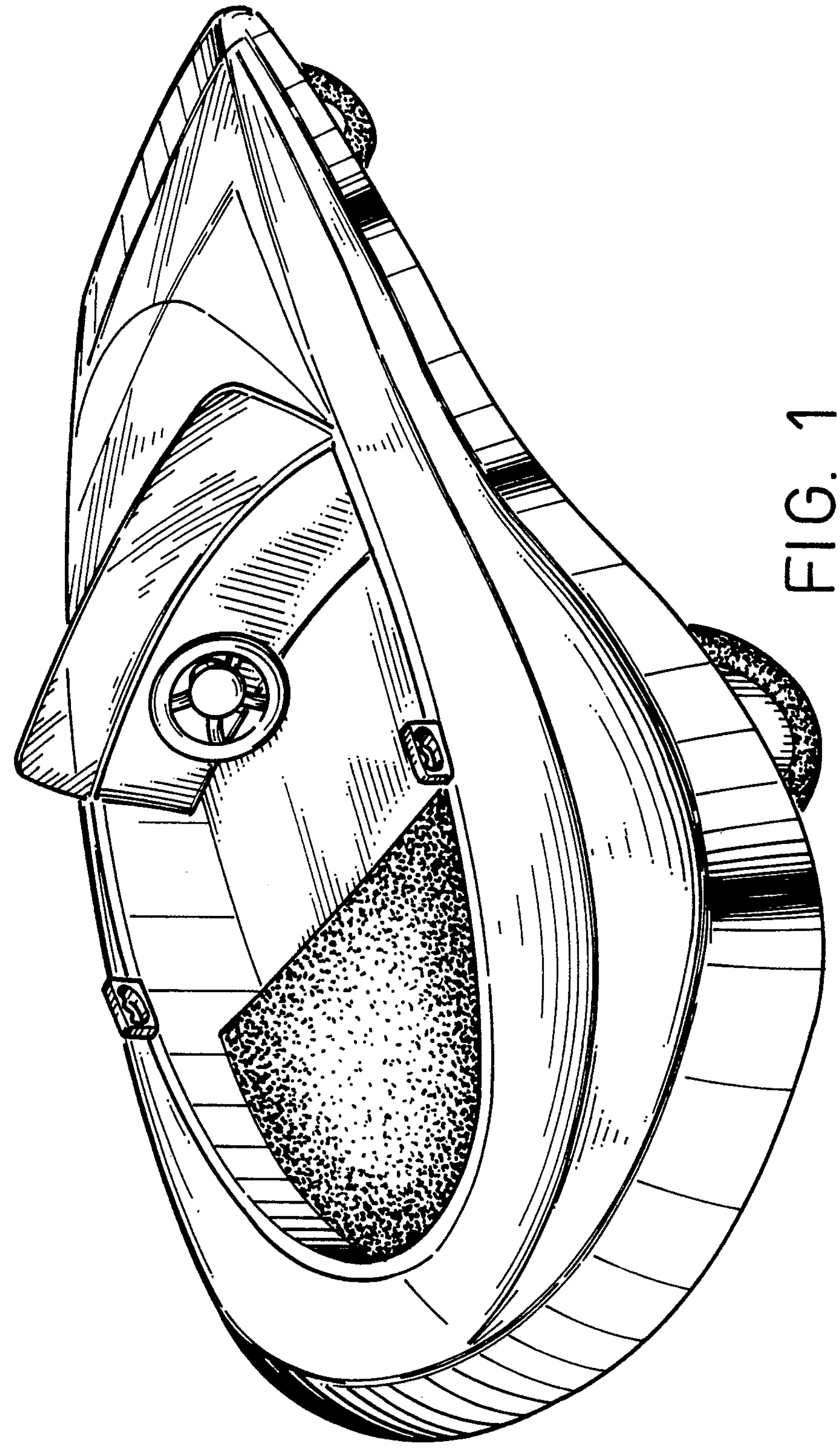

FIG. 1

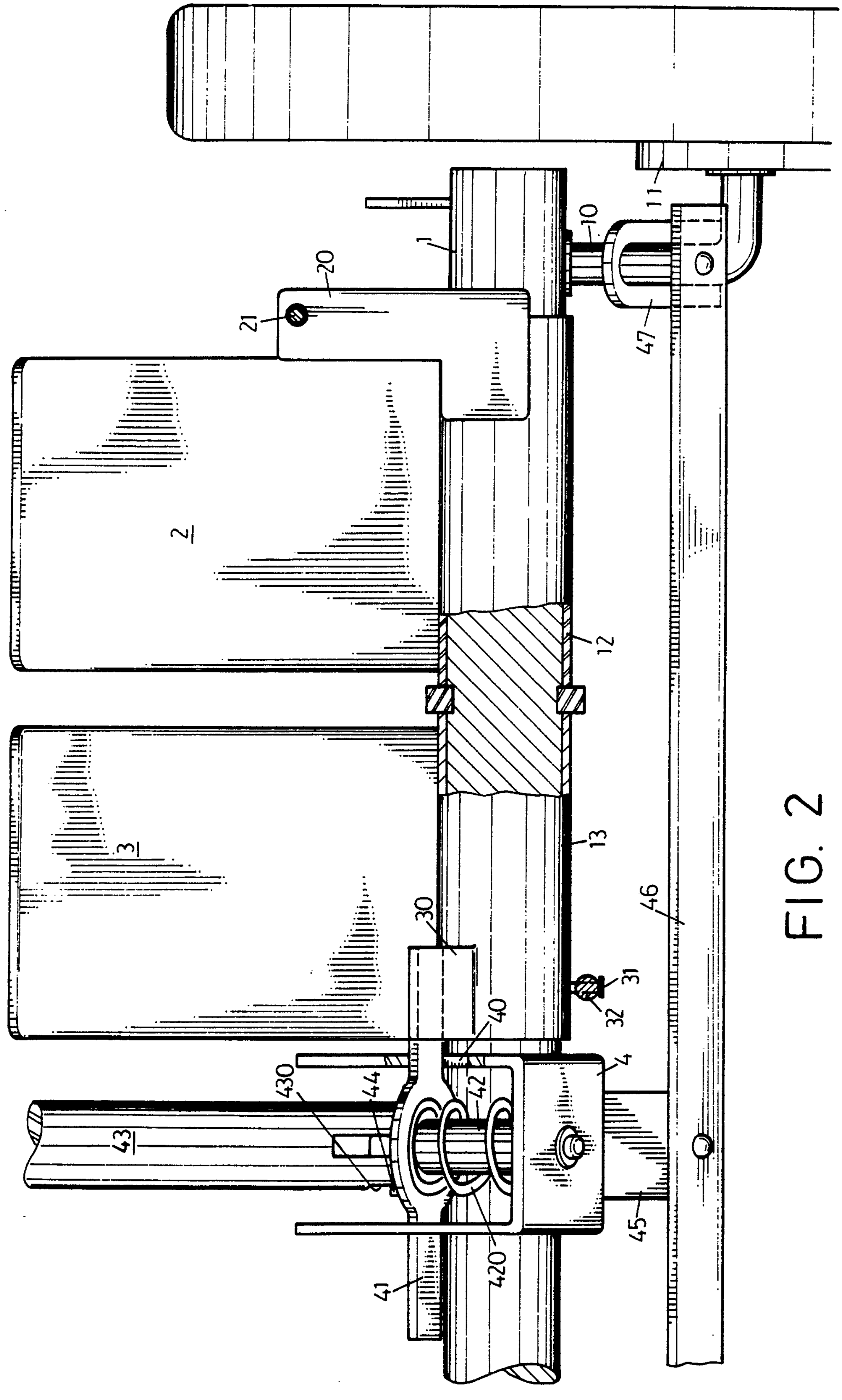


FIG. 2

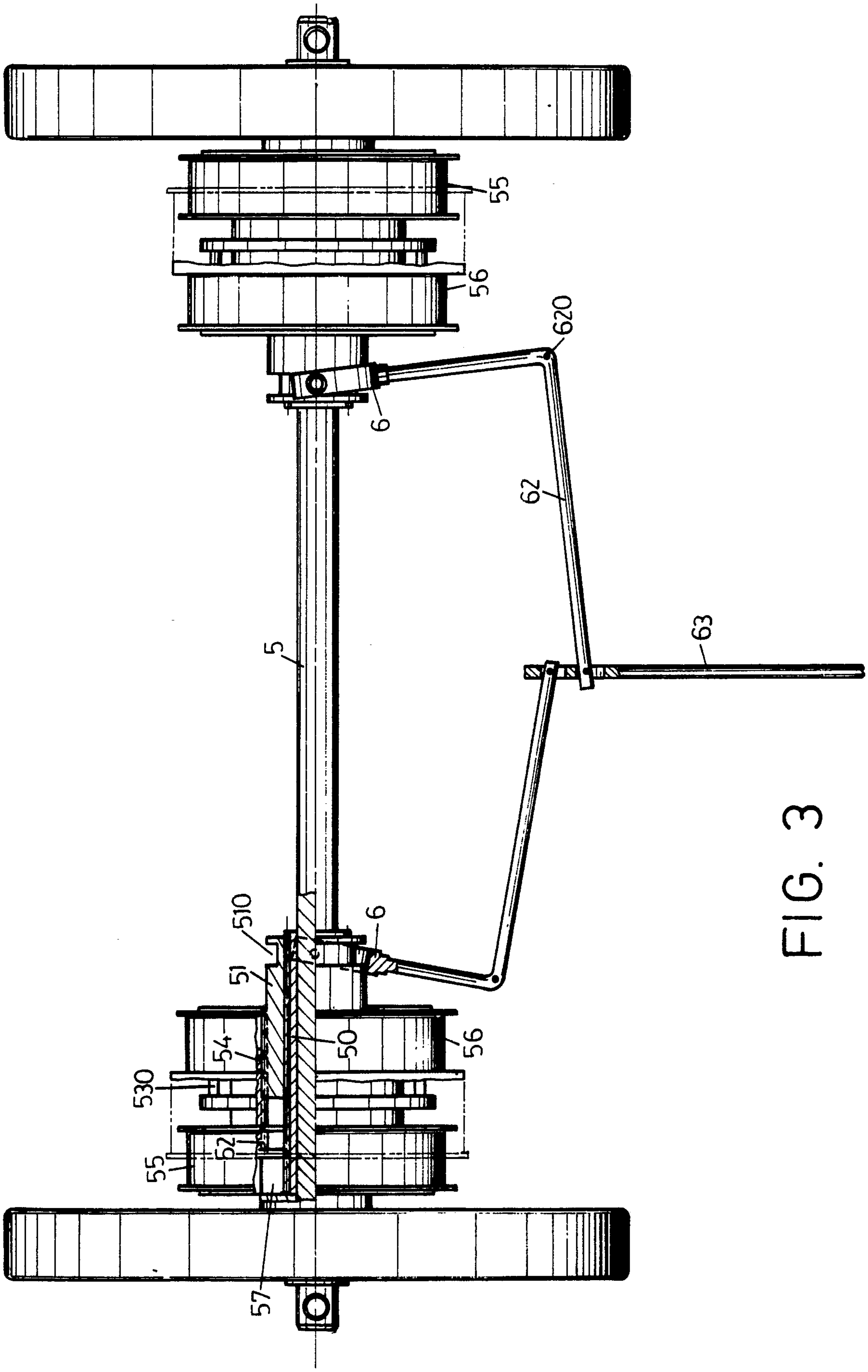


FIG. 3

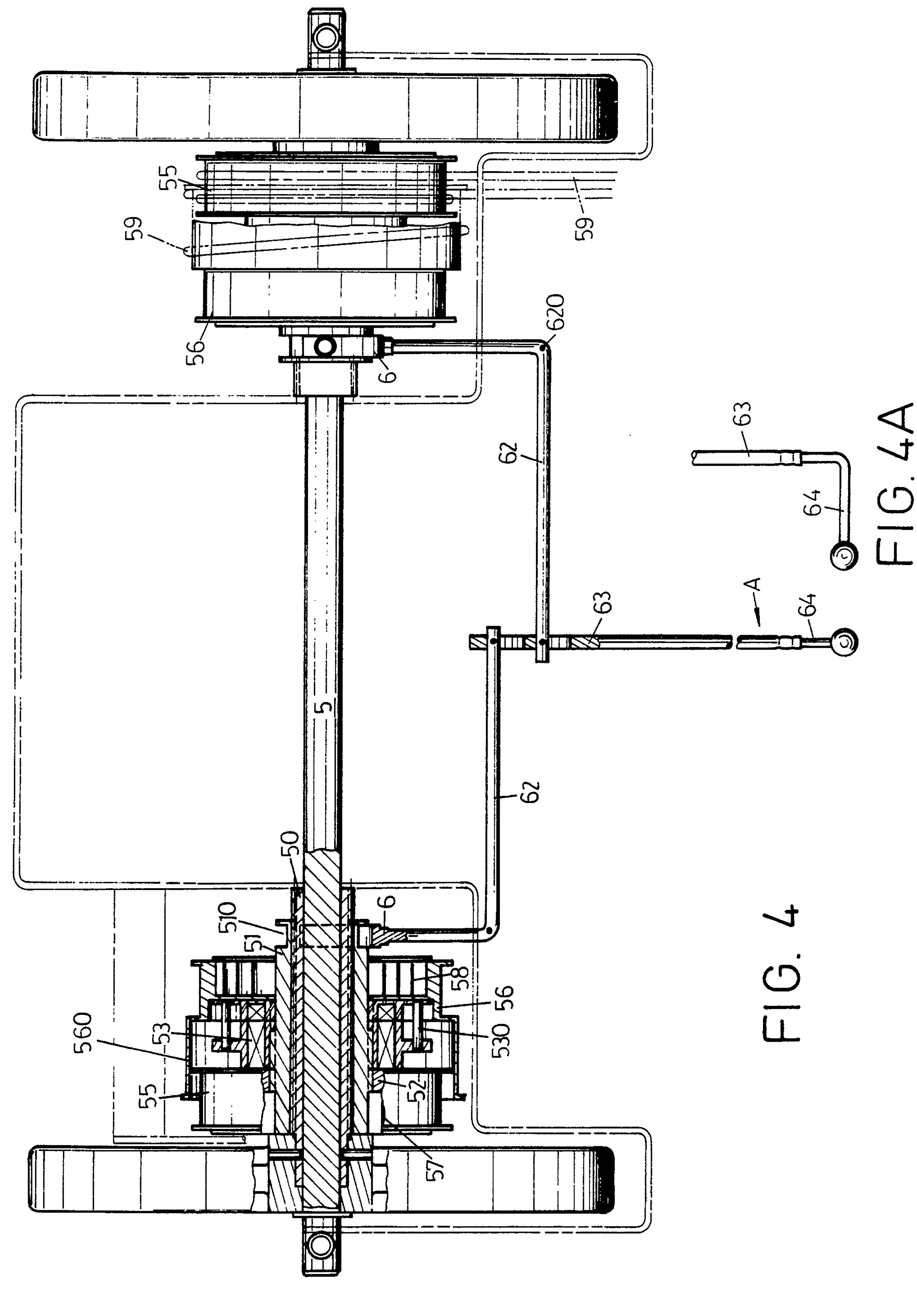
55
59
59
56
620
6
63
62
64
A
63
64
5
62
50
510
6
51
58
56
560
53
530
55
52
57

FIG. 4

FIG. 4A

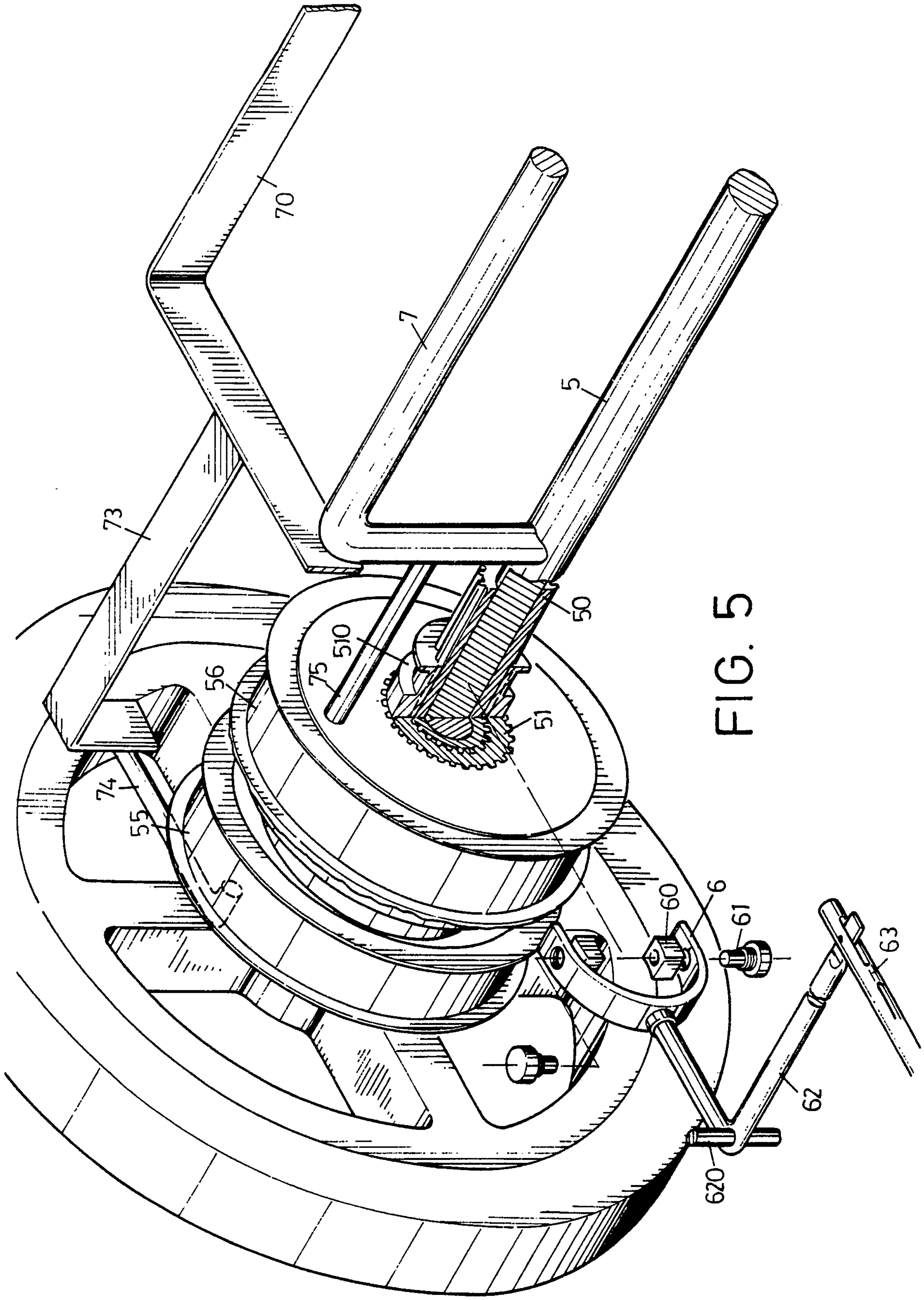


FIG. 5

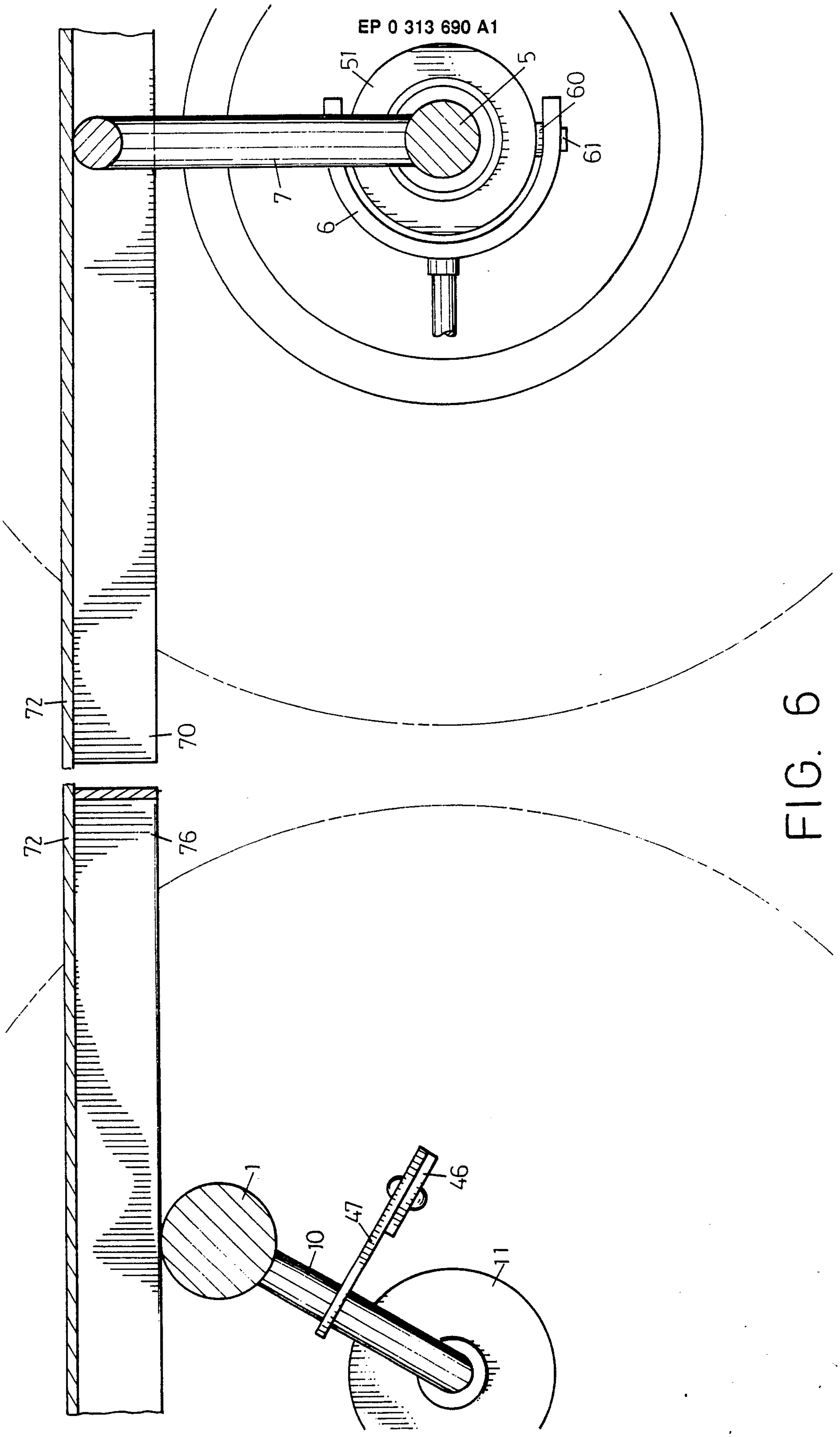


FIG. 6

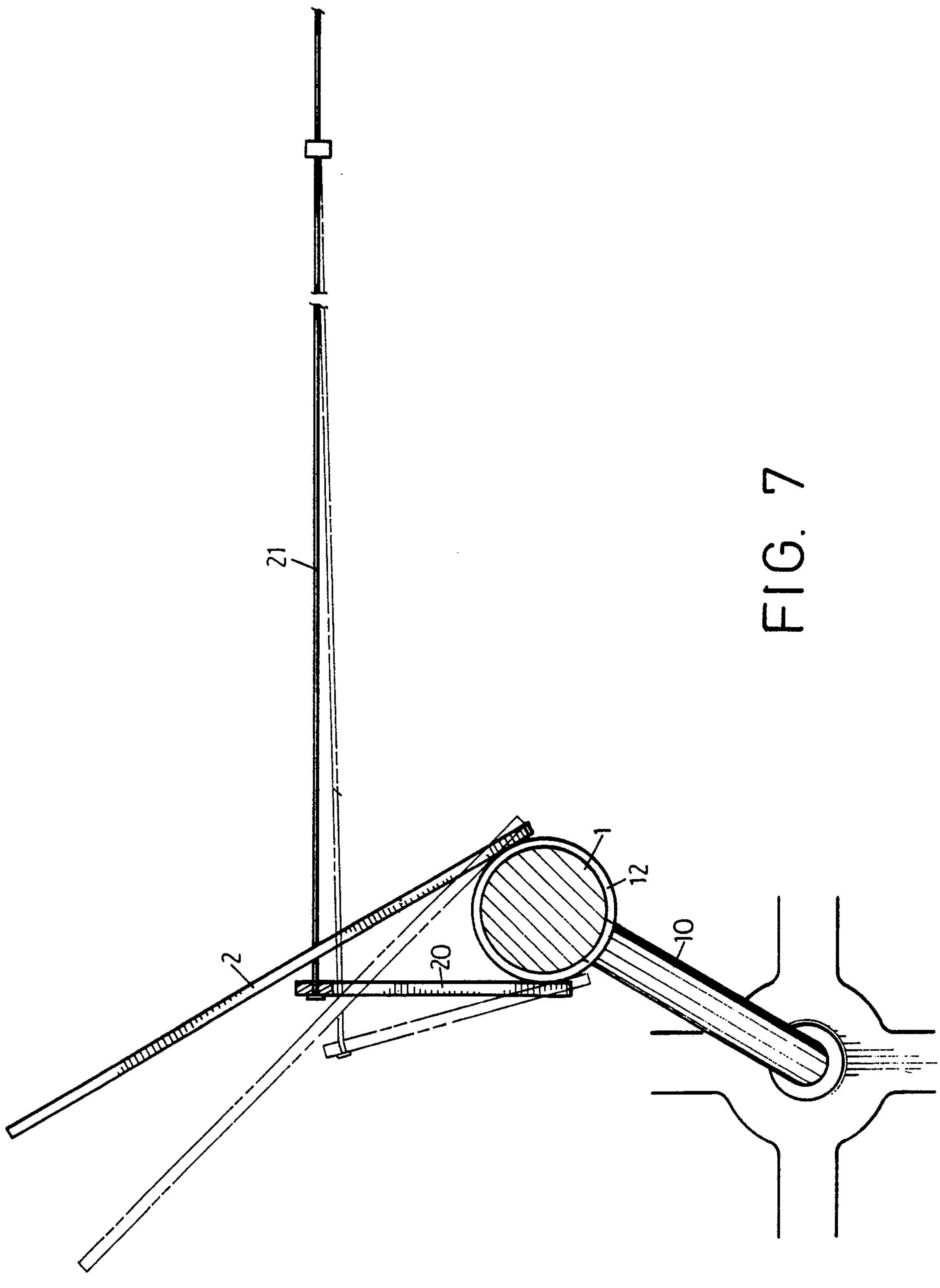


FIG. 7

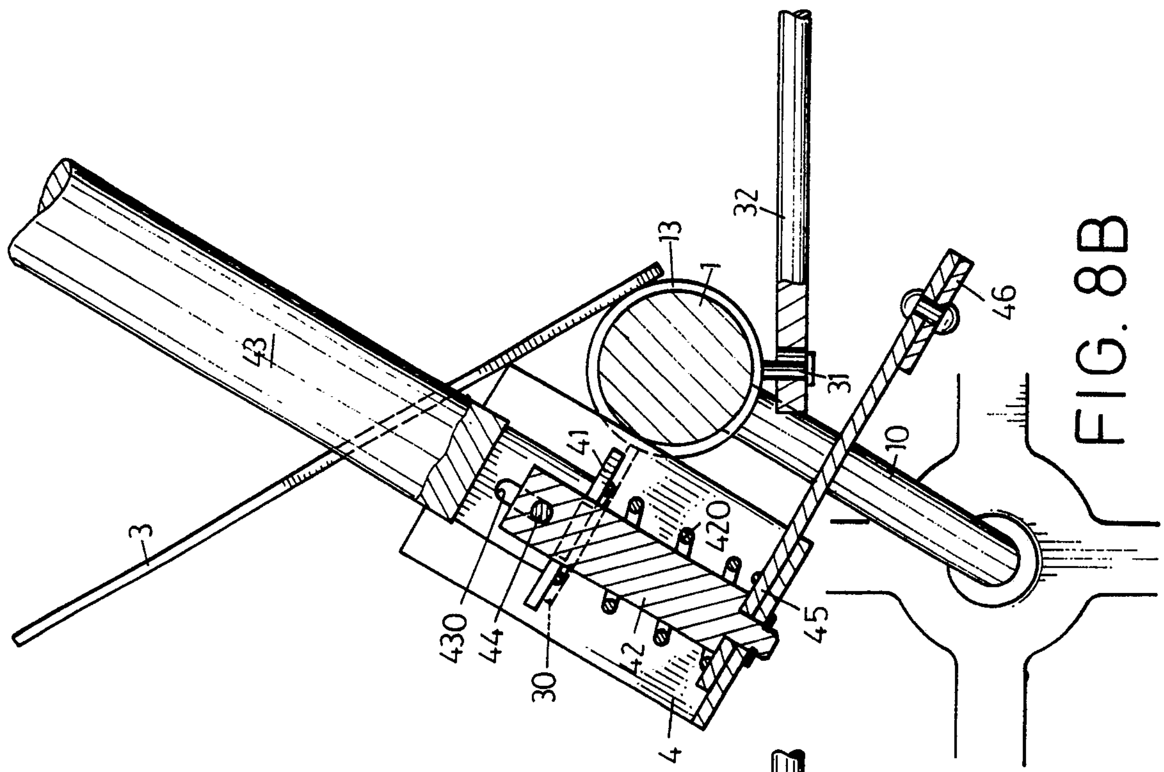
13
1
32
31
46
10
43
3
41
420
430
44
30
42
45
4

FIG. 8B

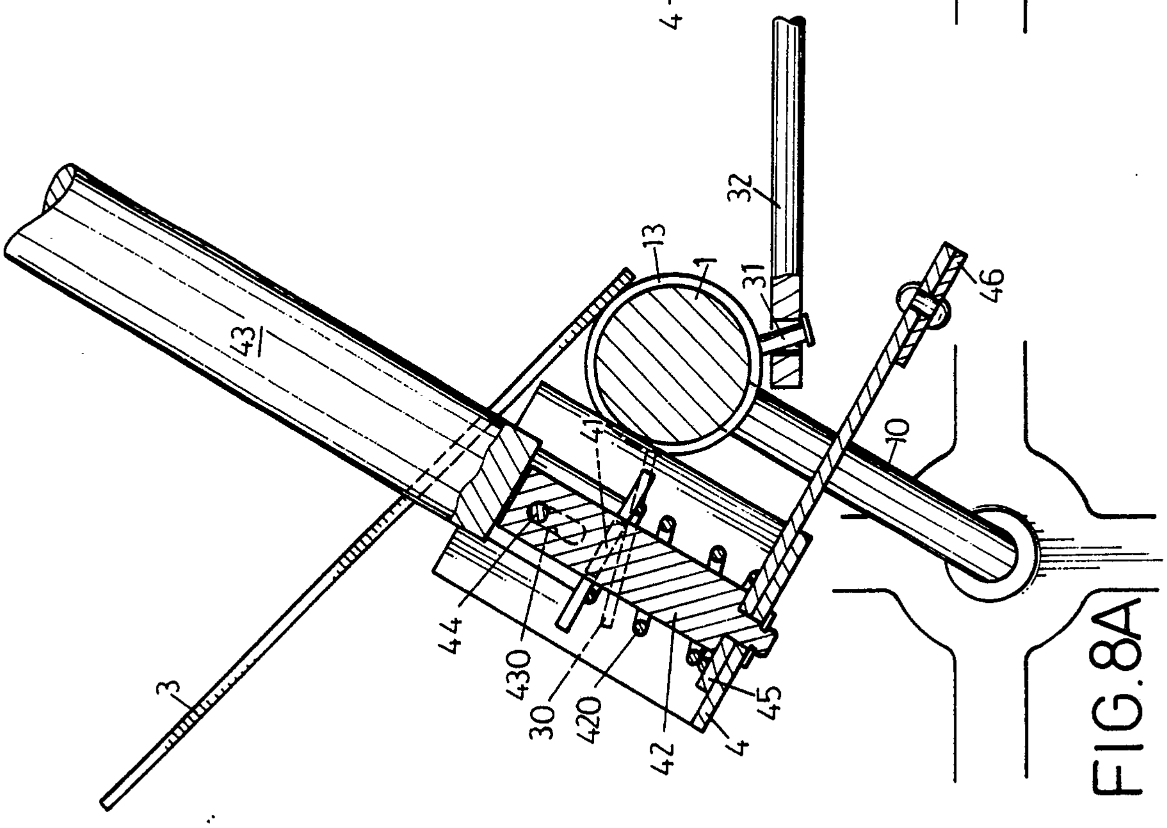
13
1
32
31
46
10
43
41
3
44
430
30
420
42
45
4

FIG.8A

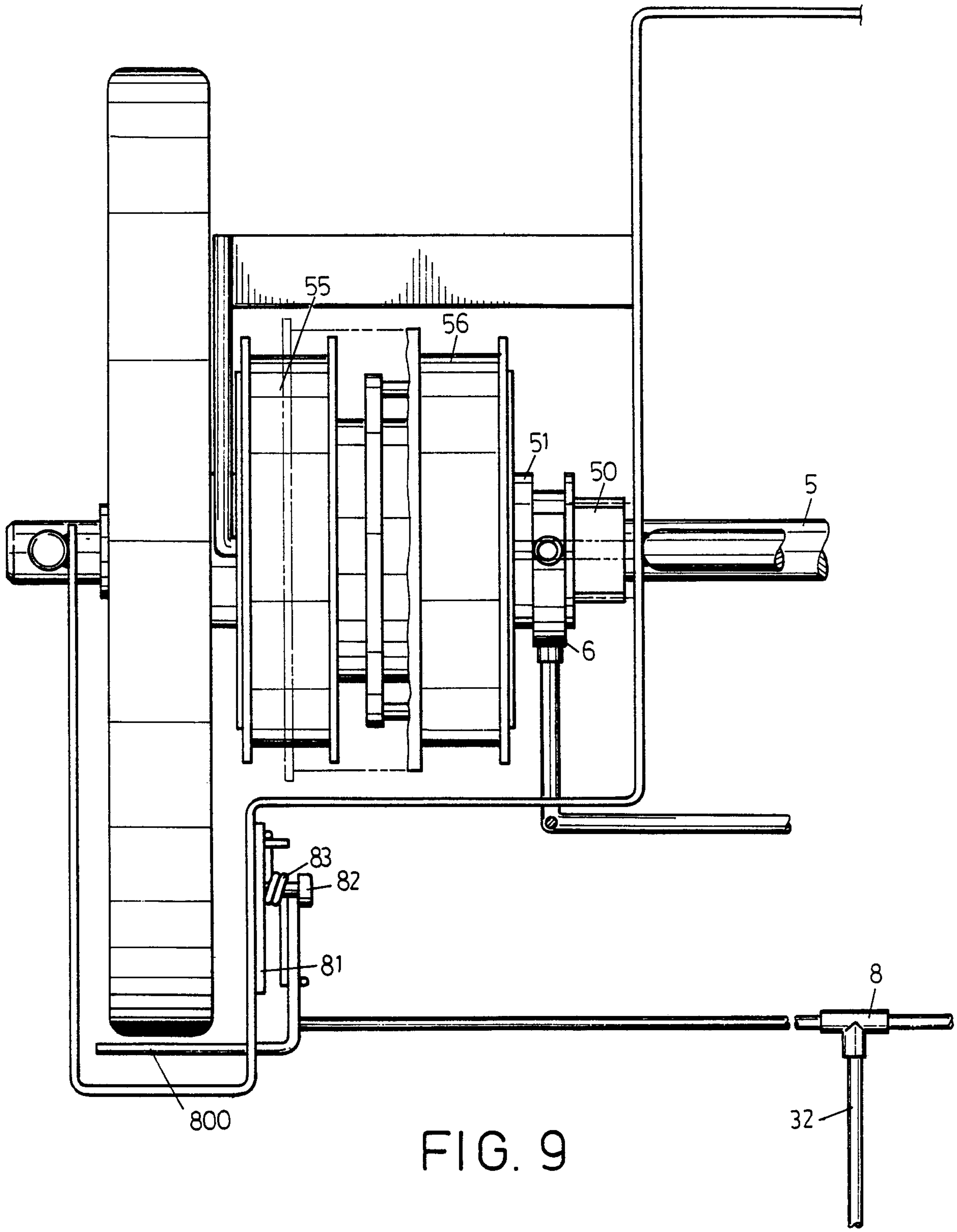


FIG. 9

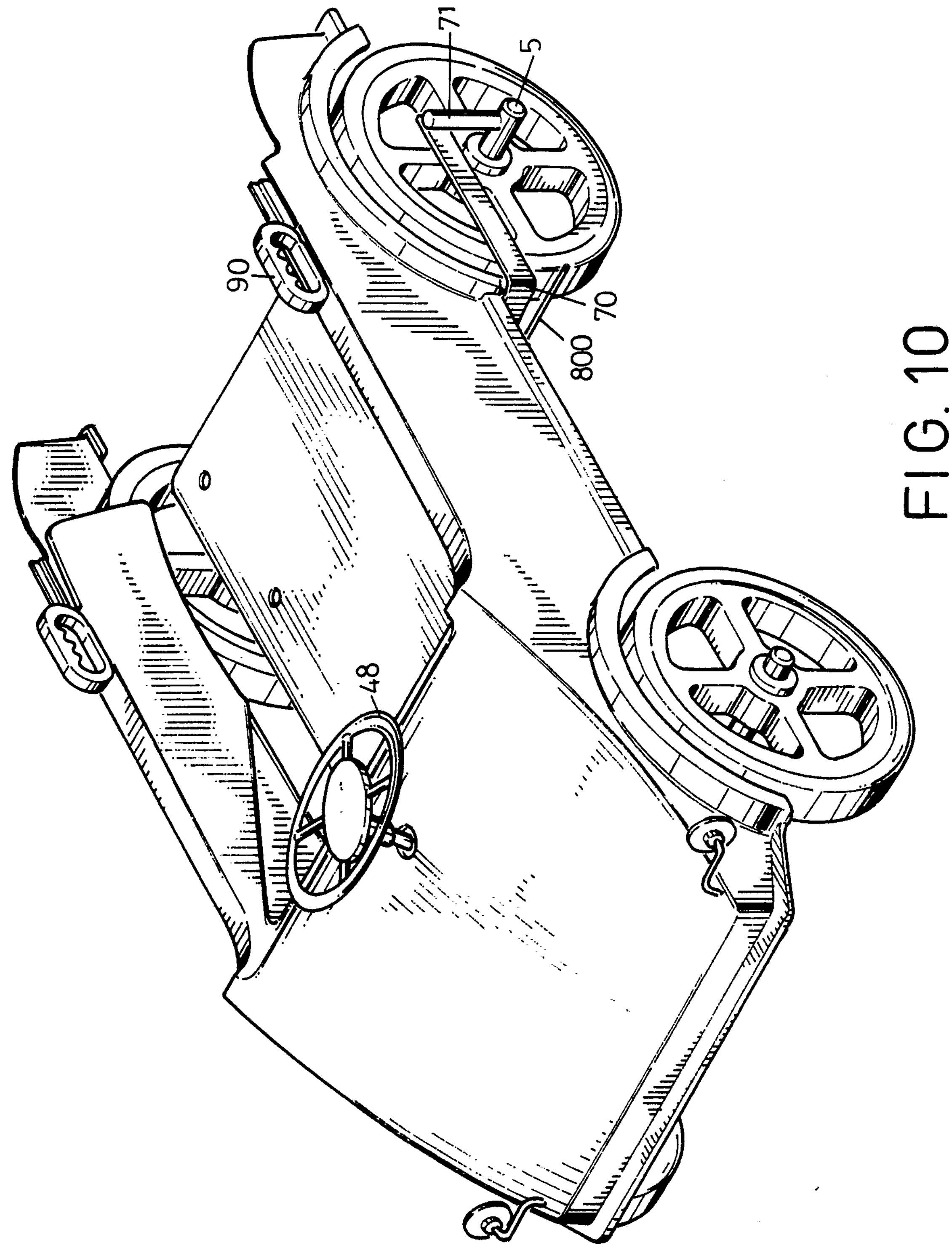


FIG. 10

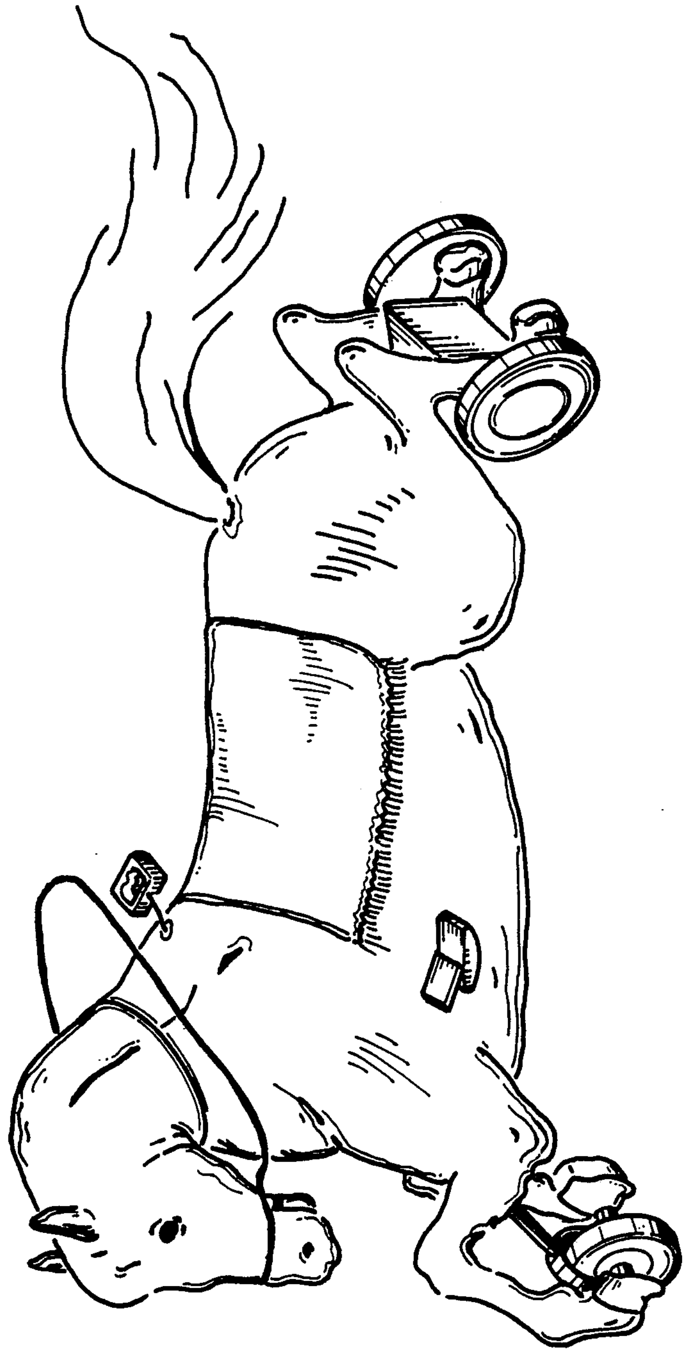

FIG. 11

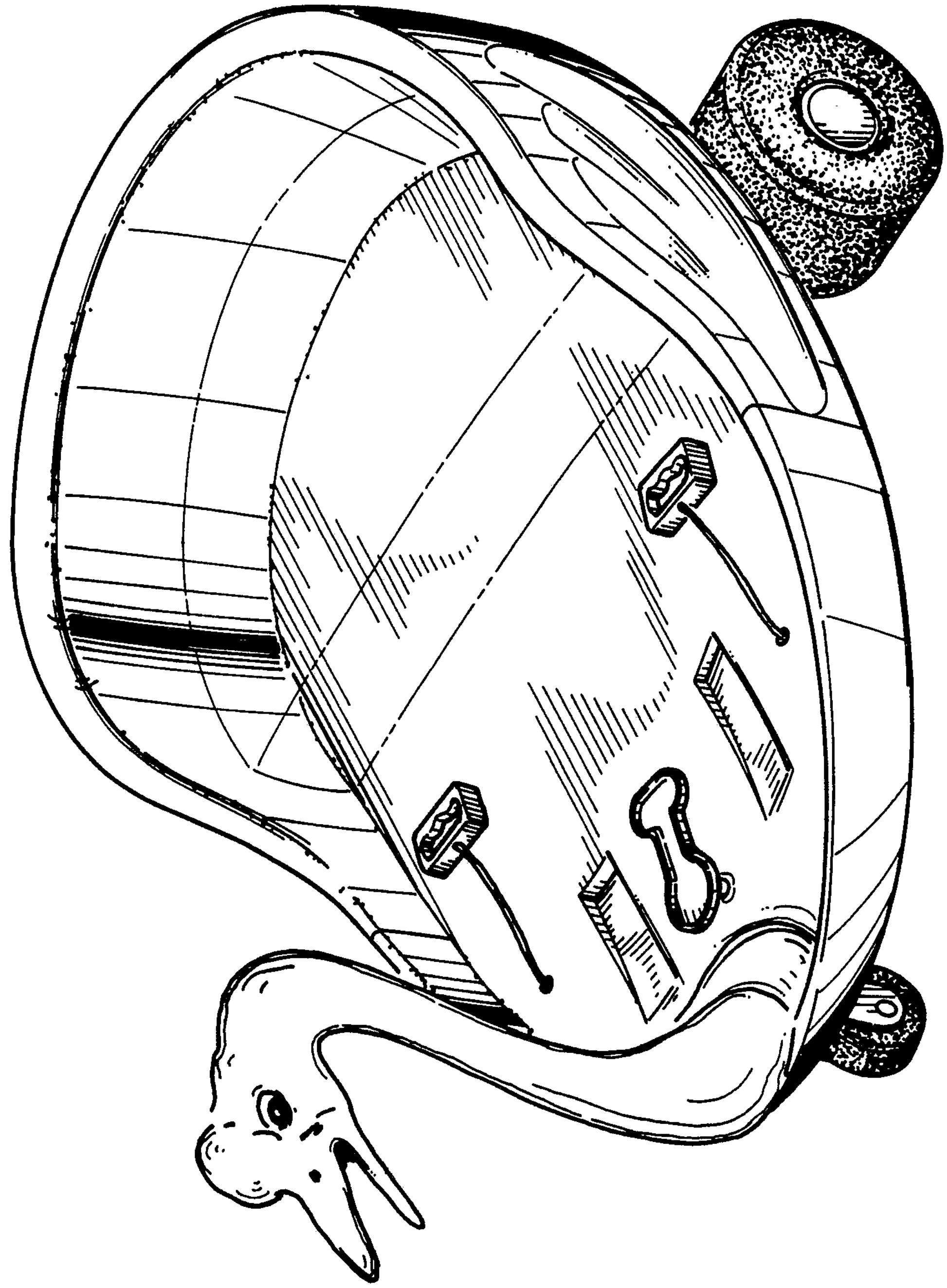

FIG. 12

European Patent Office

# EUROPEAN SEARCH REPORT

Application Number

EP 87 30 9464

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 220 413 (PEDICAR CORP.) * Figures 1-19; page 4, line 14 - page 29, line 28 * --- | 1 | B 62 K 9/00<br>B 62 K 5/00<br>B 62 M 1/04 |
| A | US-A-4 084 836 (R.J. LOHR) * Figures 1-4; column 1, line 38 - column 2, line 40 * --- | 1 | |
| A | US-A-3 718 344 (R.J. LOHR) * Figures 1-11; column 2, line 63 - column 6, line 11 * --- | 1 | |
| A | GB-A-2 145 494 (PEARSON) * Figures 1-5; page 1, line 99 - page 4, line 120 * ----- | 1 | |
| | | | **TECHNICAL FIELDS SEARCHED (Int. Cl.4)** |
| | | | B 62 K |

The present search report has been drawn up for all claims

| Place of search | Date of completion of the search | Examiner |
|---|---|---|
| THE HAGUE | 16-06-1988 | VANNESTE M.A.R. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)